# EUROPÄISCHE PATENTSCHRIFT

(11) **EP 0 840 427 B1**
(45) Veröffentlichungstag und Bekanntmachung des Hinweises auf die Patenterteilung: **14.06.2006**
(21) Anmeldenummer: 97117982.5
(22) Anmeldetag: 16.10.1997
(51) Int. Cl.: H02K 15/14

(54) **Verfahren und Vorrichtung zur Bestückung des Motorgehäuses eines permanenterregten elektromotors**
Method and device for mounting a permanent magnet excited motor casing
Méthode et dispositif de montage du boîtier d'un moteur électriqueexcité par aimant permanent

(30) Priorität: 30.10.1996 DE 19643881
(43) Veröffentlichungstag der Anmeldung: 06.05.1998
(73) Patentinhaber: SIEMENS AKTIENGESELLSCHAFT, 80333 München (DE)
(72) Erfinder: Freese, Jürgen, 97273 Kürnach (DE); König, Michael, Dipl.-Ing., 97082 Würzburg (DE)

(56) Entgegenhaltungen:
- EP-A- 0 682 398
- DE-A- 3 501 431
- DE-A- 4 421 855
- US-A- 5 276 375
- US-A- 5 345 129

## Beschreibung

Verfahren und Vorrichtung zur Bestückung des Motorgehäuses eines permanenterregten Elektromotors

Die Erfindung bezieht sich auf ein Verfahren bzw. eine Vorrichtung zur Bestückung des Motorgehäuses eines permanenterregten Elektromotors gemäß Patentanspruch 1 bzw. gemäß Patentanspruch 7; derartige Elektromotore werden z.B. zum Antrieb von Hydraulikpumpen für ein Antiblockier-Bremssystem in einem Kraftfahrzeug eingesetzt.

Bei einem z.B. durch die EP 0 682 398 B1 bekannten Motor-Pumpen-Aggregat, insbesondere für einen ABS-Antrieb in einem Kraftfahrzeug, ist ein topfförmiges Motorgehäuse eines Elektromotors mit seiner offenen Topfrandseite an ein Pumpengehäuse der Hydraulikpumpe angeflanscht. Die Rotorwelle des Elektromotors ragt mit einem Wellenstumpf in die Hydraulikpumpe und treibt mit einem an den Wellenstumpf angeformten Exzenter Pumpenstößel der Hydraulikpumpe an. Die Rotorwelle ist an dem der Hydraulikpumpe abgewandten Ende des Elektromotors in einem Kalottenlager gelagert, das mittels einer Klemmbrille in einer vertieften Lageraufnahme im Topfboden des topfförmigen Motorgehäuses fixiert ist. Am Innenumfang des Motorgehäuses sind der Erregung des Elektromotors dienende Magnetschalen befestigt. Zur Fixierung der Magnetschalen am Innenumfang des Motorgehäuses dienen z.B. durch die EP 0 544 929 B1 bekannte Halterungsteile in Form von gegen die Stirnseiten der Magnetschalen andrückenden Federelementen bzw. Distanzstücken.

Gemäß Aufgabe vorliegender Erfindung soll die Bestückung des Motorgehäuses mit zumindest einem Lager, den Magnetschalen sowie den zwischen deren tangentialen Stirnseiten einzuführenden Abstandshaltern, insbesondere in Form von wechselweise am Umfang angeordneten festen Distanzstücken bzw. Klemm-Federelemente, in montage- bzw. fertigungstechnischer Hinsicht, insbesondere in vorteilhafter Einsatzmöglichkeit für eine Automaten-Serienfertigung, vereinfacht werden. Die Lösung dieser Aufgabe gelingt erfindungsgemäß durch ein Verfahren gemäß Patentanspruch 1 bzw. eine Vorrichtung zur Durchführung dieses Verfahrens gemäß Patentanspruch 7; vorteilhafte Ausgestaltungen des Verfahrens sind Gegenstand der Unteransprüche 2 bis 6.

Das erfindungsgemäße Verfahren bzw. die zu deren Durchführung vorgesehene erfindungsgemäße Vorrichtung erlauben mit nur einer einzigen Montagevorrichtung beim bzw. unmittelbar nach dem Überstülpen des Motorgehäuses mittels der einzigen Montagevorrichtung sämtliche darin zuvor vorpositionierten Bauteile des Lagers, der Magnetschalen sowie der Abstandshalter in ihre Betriebsendposition zu bringen und dadurch das Gleitlager in seiner Lageraufnahme sowie die Magnetschalen am Innenumfang des Motorgehäuses durch die stirnseitig zwischengedrückten Abstandshalter in ihrer betrieblichen Endposition zu fixieren.

Zweckmäßigerweise werden dazu vor dem Überstülpen des Motorgehäuses an der diesem zugewandten Stirnseite der Montagevorrichtung das Lager und am Umfang der Montagevorrichtung die Magnetschalen in ihrer Betriebsendposition vorpositioniert sowie die Abstandshalter in der Montagevorrichtung in ihrer tangentialen und axialen Betriebsendposition, jedoch radial gegenüber dieser zurückversetzt vorpositioniert und dann beim Überstülpen des Motorgehäuses in einem ersten Verfahrensschritt das Lager in einer stirnseitigen, insbesondere topfförmigen, Lageraufnahme des Motorgehäuses gegebenenfalls mit einer zusätzlich andrückenden Klemmbrille endfixiert und in einem weiteren Verfahrensschritt die Abstandshalter zwischen die tangentialen Stirnseiten der Magnetschalen ebenfalls in ihre Betriebsendposition radial vorgedrückt.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: teilweise in Explosionsdarstellung die axiale Vorderansicht auf eine mit den Bauteilen vorbestückte Montagevorrichtung sowie das überzustülpende Motorgehäuse;
- FIG 2: die stirnseitige Unteransicht der vorbestückten Montagevorrichtung gemäß FIG 1;
- FIG 3: die axiale Vorderansicht auf die noch nicht vorbestückte Montagevorrichtung und die axial zuzuführenden Bauteile des Motorgehäuses, des Lagers und eines das Lager fixierenden Lagerbefestigungselementes, insbesondere einer Klemmbrille;
- FIG 4: im axialen Schnitt ein bekanntes Elektromotor-Pumpen-Aggregat für einen Kraftfahrzeug-ABS-Antrieb.

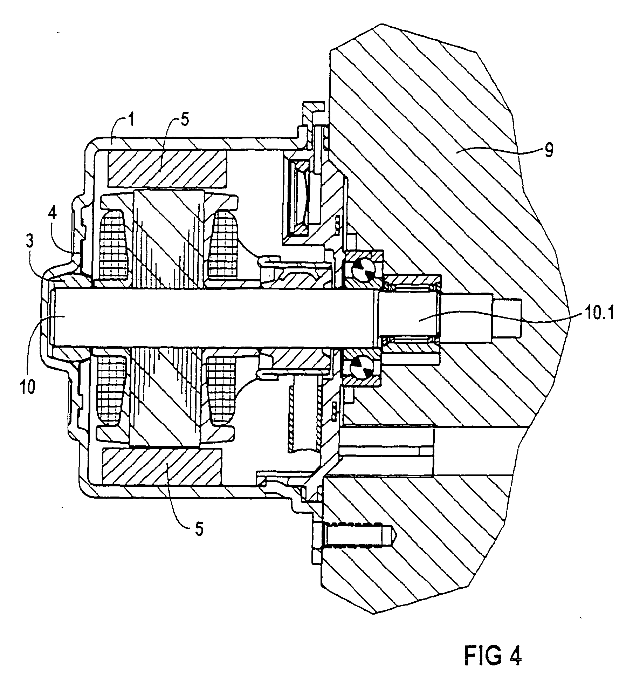

FIG 4 zeigt zur allgemeinen Erläuterung ein z.B. durch die EP 0 682 398 B1 bekanntes Motor-Pumpen-Aggregat mit einer an ein Motorgehäuse 1 eines Elektromotors angeflanschten Hydraulikpumpe 9. Die Rotorwelle 10 des Elektromotors ragt mit einem exzenterförmigen Rotorwellenstumpf 10.1 in die Hydraulikpumpe 9. Auf dem exzenterförmigen Rotorwellenstumpf 10.1 liegen in hier nicht näher dargestellter Weise Pumpenstößel der Hydraulikpumpe 9 auf, die von dem Elektromotor bei Drehung der Rotorwelle 10 mit einer Auf-Ab-Bewegung angetrieben werden. Die Rotorwelle 10 ist an ihrem linken Ende in einem Kalottenlager 3 gelagert, das in eine topfförmige Vertiefung 3 im Topfboden des Motorgehäuses 1 durch axiales Gegenliegen eines in der Lageraufnahme fixierten Lagerbefestigungselementes 4, insbesondere in Form einer elastischen Klemmbrille, angedrückt und gehaltert ist. Am Innenumfang des Motorgehäuses 1 sind zur Motorerregung Magnetschalen 5 dadurch gehaltert, daß zwischen ihre tangentialen Stirnseiten, in z.B. durch die EP 0 544 929 B1 bekannter Weise, Distanzstücke bzw. Klemm-Federelemente angedrückt sind.

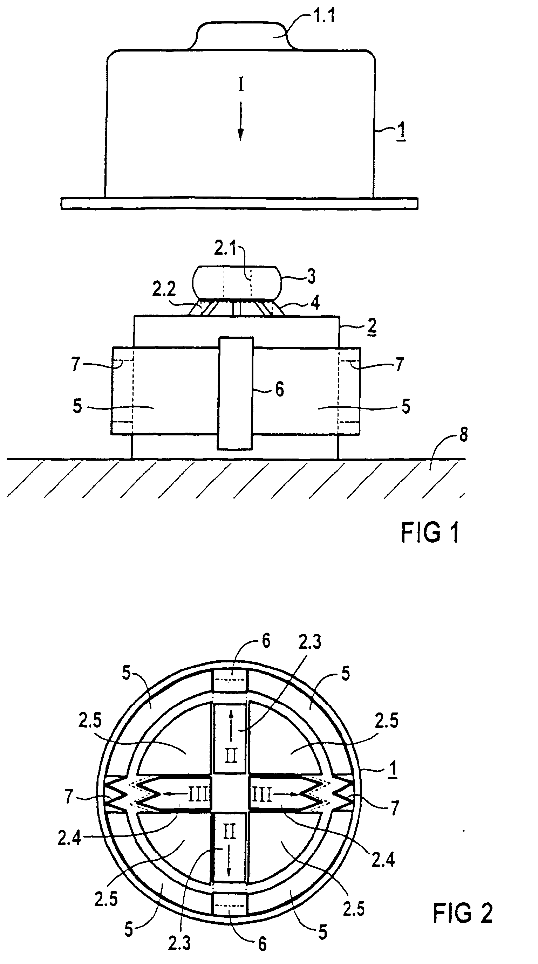

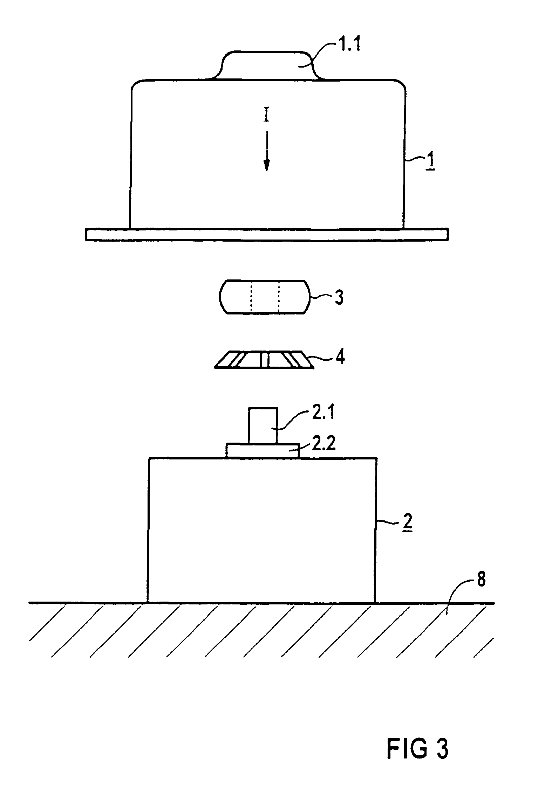

Zur Erläuterung des erfindungsgemäßen Bestückungsverfahrens bzw. der dazu vorgesehenen Vorrichtung wird auf die Figuren 1 bis 3 verwiesen.

Auf eine Montageplatte 8 ist eine stempelartige Montage-Vorrichtung 2 aufgesetzt, in der die zubestückenden Bauteile eines Lagers 3 und des dieses sichernden Befestigungselementes 4 in Form einer Klemmbrille sowie die Magnetschalen 5 und deren stirnseitig einzudrückenden Abstandshalter 6;7 vorpositioniert sind.

Im Einzelnen sind dazu das Lager 3 sowie dessen Lagerbefestigungselement 4 auf an der oberen Stirnseite der Montagevorrichtung 1 vorgesehene Montagedorne 2.1;2.2 aufgesteckt; der das Lager 3 aufnehmende Montagedorn 2.1 entspricht dabei zweckmäßigerweise in seinen radialen Außenmassen der Rotorwelle 10 des Elektromotors. Als weitere Bauteile sind am Außenumfang der Montage-Vorrichtung 2 vier Magnetschalen 5 derart in ihrer Betriebsendposition vorpositioniert, daß ein geführtes Überstülpen des Motorgehäuses 1 gewährleistet ist.

Als zwischen die tangentialen Stirnseiten der Magnetschalen 5 einzubringende Abstandshalter sind feste Distanzstücke 6 bzw. Klemmfeder-Elemente 7 in der Montage-Vorrichtung 2 in ihrer tangentialen und axialen Betriebsendposition, jedoch radial gegenüber dieser zurückversetzt entsprechend der gestrichelten Kontur in FIG 2 vorpositioniert.

Zur Bestückung des Motorgehäuses 1 mit den Bauteilen zumindest eines Lagers 3, gegebenenfalls eines dieses axial fixierenden Befestigungselementes 4, der Magnetschalen 5 sowie der Abstandshalter 6;7 wird das Motorgehäuse 1 über die Montage-Vorrichtung 2 gestülpt und dabei in einem ersten Bestückungs-Verfahrensschritt I das Lager 3 in die topfförmige Lageraufnahme 1.1 ein- und das Lagerbefestigungselement 4 gegengedrückt sowie in der Lageraufnahme 1.1 fixiert; wenn das topfförmige Gehäuse 1 seine axiale Betriebsendposition relativ zu den Magnetschalen 5 durch Aufliegen seines Topfrandes auf der Montageplatte 8 erreicht hat, werden in einem weiteren Bestückungs-Verfahrenschritt II die festen Distanzstücke 6 mittels Druckstempel 2.3 zwischen die jeweiligen tangentialen Stirnseiten zweier benachbarter Magnetschalen 5 gedrückt. Anschließend werden in einem dritten Verfahrensschritt III die Klemmfeder-Elemente 7 in die jeweils am Umfang wechselweise zu den Distanzstücken 6 verbleibenden Lücken zwischen den tangentialen Stirnseiten der Magnetschalen 5 durch Druckstempel 2.4 derart vorgedrückt, daß die Magnetschalen 5 unter Vermittlung der Distanzstücke 6 einen sicheren Klemmschluß sowohl gegenseitig als auch gegenüber dem Innenumfang des Motorgehäuses 1 gewährleisten. Die Druckstempel 2.3 bzw.2.4 gleiten bei ihrer radialen Eindrückbewegung der Distanzstücke 6 bzw. der Klemmfeder-Elemente 7 zwischen Führungsstücken 2.5; zur besseren Verdeutlichung des Erfindungswesentlichen sind bei der Darstellung der bestückten Montage-Vorrichtung 2 gemäß FIG 1 die Führungsstücke 2.5 sowie die Druckstücke 2.3 und 2.4 weggelassen.
Es dürfte ersichtlich sein, daß bei dem erfindungsgemäßen Verfahren bzw. bei der erfindungsgemäßen Vorrichtung durch die stempelartige, mit dem Lager sowie den Magnetschalen und den Abstandshaltern in bestimmter Weise vorbestückte Montage-Vorrichtung in einem einzigen Fertigungsvorgang im Sinne einer Aufbaumontage sämtliche wesentlichen Bauteile in einfacher Weise in das Motorgehäuses eingebracht und fixiert werden können.

## Patentansprüche

1. Verfahren zur Bestückung des Motorgehäuses (1) eines permanenterregten Elektromotors zumindest mit einem Lager (3), insbesondere einem Gleitlager, mit Magnetschalen (5) sowie mit Abstandshaltern (6;7), insbesondere Distanzstücken (6) und Klemm-Federelementen (7), zwischen den tangentialen Stirnseiten der Magnetschalen (5), mit folgenden Verfahrensschritten:
- Das vorzugsweise topfförmige Motorgehäuse (1) wird mit seiner offenen Stirnseite über eine stempelartige Montage-Vorrichtung (2) gestülpt
- und mit den in der Montage-Vorrichtung (2) vorpositionierten Bauteilen zunächst des Lagers (3), dann der Magnetschalen (5) und schließlich der Abstandshalter (6;7) bestückt.

2. Verfahren nach dem vorhergehenden Anspruch mit folgenden Verfahrensschritten:
- Vor dem Überstülpen des Motorgehäuses (1) wird an der diesem zugewandten Stirnseite der Montage-Vorrichtung (2) das Lager (3) vorpositioniert;
- vor dem Überstülpen des Motorgehäuses (1) werden am Umfang der Montage-Vorrichtung (2) die Magnetschalen (5) in ihrer Bestriebsendposition vorpositioniert;
- vor dem Überstülpen des Motorgehäuses (1) werden die Abstandshalter (6;7) in der Montage-Vorrichtung (2) in ihrer tangentialen und axialen Betriebsendposition, radial jedoch gegenüber dieser zurückversetzt vorpositioniert;
- mit dem Überstülpen des Motorgehäuses (1) wird das Lager (3) in einer stirnseitigen, insbesondere topfförmigen, Lageraufnahme (1.1) des Motorgehäuses (1) in einem ersten Bestückungs-Verfahrensschritt (I) endfixiert;
- wenn das Motorgehäuses (1) beim Überstülpen seine Betriebsendposition relativ zu den Magnetschalen (5) erreicht hat, werden in einem zweiten Bestückungs-Verfahrensschritt (II) die Abstandshalter (6;7) in ihre Betriebsendposition gebracht.

3. Verfahren nach zumindest einem der vorhergehenden Ansprüche mit folgendem Verfahrensschritt:
- Das Lager (3) wird in seiner Vorpositionierung auf einem der Rotorwelle (10) des Elektromotors entsprechenden Montagedorn (2.1) der Montage-Vorrichtung (2) aufgesteckt und axial abgestützt.

4. Verfahren nach zumindest einem der vorhergehenden Ansprüche mit folgendem Verfahrensschritt:
- Zwischen dem Lager (3), insbesondere Kalotten-Gleitlager, und dessen axialer Abstützung an der Montage-Vorrichtung (2), ist ein Lagerbefestigungselement (4), insbesondere eine beim Überstülpen des Motorgehäuses (1) in dessen Lageraufnahme (1.1) miteindrückbare elastische Klemmbrille, mitvorpositioniert.

5. Verfahren nach zumindest einem der vorhergehenden Ansprüche mit folgendem Verfahrensschritt:
- Als Abstandshalter werden in Umfangsrichtung wechselweise feste Distanzstücke (6) bzw. federelastische, die Magnetschalen (5) an das Motorgehäuse (1) andrückende Klemm-Federelemente (7) in der Montage-Vorrichtung (2) vorpositioniert und nach dem Überstülpen des Motorgehäuses (1) nach radial außen in ihre Betriebsendposition zwischen die Stirnseiten der Magnetschalen (5) gedrückt.

6. Verfahren nach dem vorhergehenden Anspruch mit folgendem Verfahrensschritt:
- Nach dem Überstülpen des Motorgehäuses (1) werden zunächst die festen Distanzstücke (6) in einem Bestückungs-Verfahrensschritt (II) und anschließend die federelastischen Klemm-Federelemente (7) in einem weiteren Verfahrensschritt (III) in ihre Betriebsendposition gedrückt.

7. Vorrichtung zur Durchführung des Verfahrens nach zumindest einem der vorhergehenden Ansprüche mit folgenden Merkmalen:
- Die umfangsseitig mit den Magnetschalen (5) bestückte Montage-Vorrichtung (2) ist im Sinne eines axialen Führungsstempels für das überstülpbare Motorgehäuses (1) ausgebildet;
- die Montage-Vorrichtung (2) weist stirnseitig eine geführte axiale Abstützaufnahme für das Lager (3) bzw. dessen Befestigungselement (4), insbesondere Klemmbrille, auf;
- die Montage-Vorrichtung (2) weist radiale Führungsaufnahmen (2.2) für die Abstandhalter (6;7) auf;
- die Montage-Vorrichtung (2) weist radiale Druckmittel (2.3;2.4) zur, insbesondere zeitlich zueinander versetzten, radialen Bewegung der Abstandshalter (6;7) aus ihrer radialen Vormontageposition in ihre betriebsmäßige Endposition zwischen den tangentialen Stirnseiten der Magnetschalen (5) auf.

## Claims

1. Method for mounting the motor casing (1) of a permanent magnet excited electric motor with at least one bearing (3), especially a plain bearing, with magnet shells (5) and distance pieces (6; 7), especially spacers (6), and clamping spring elements (7), between the tangential front faces of the magnet shells (5), with the following steps of the method.
- the open end side of the, preferably pot-shaped, motor casing (1) is crimped over using a punch-type assembly device (2)
- and with the components prepositioned in the assembly device (2), first the bearing (3), then the magnet shells (5) and finally the distance pieces (6; 7) are fitted.

2. Method in accordance with the preceding claim with the following steps of the method.
- before the motor casing (1) is crimped over, the bearing (3) is prepositioned at the front faces of the assembly device (2) turned towards it.
- Before the motor casing (1) is crimped over, the magnet shells (5) are prepositioned in their operating end position on the periphery of the assembly device (2).
- Before the motor casing (1) is crimped over, the distance pieces (6; 7) are prepositioned in the assembly device (2) in their tangential and axial operating end positions but set back radially opposite these.
- When the motor casing (1) is being crimped over, the bearing (3) is finally fixed in a frontal, particularly pot-shaped bearing housing (1.1) of the motor casing (1) in a first mounting step of the method (I).
- When the motor casing (1) as it is being crimped over has reached its operating end position relative to the magnet shells (5), the distance pieces (6; 7) are brought to the operating end position in a second mounting step of the method (II).

3. Method in accordance with at least one of the preceding claims, with the following step of the method.
- The bearing (3) is, when prepositioning, placed on an assembly mandrel (2,1) of the assembly device (2) corresponding to the rotor shaft (10) of the electric motor and is axially supported.

4. Method in accordance with at least one of the preceding claims with the following step of the method.
- A bearing securing element (4), especially a resilient clamping piece pressed in to the bearing housing (1.1) when the motor casing (1) is being crimped over, is prepositioned between the bearing (3), particularly an externally-curved plain bearing, and its axial support on the assembly device (2).

5. Method in accordance with at least one of the preceding claims with the following step of the method
- As distance pieces, fixed spacers (6) or resilient clamping spring elements (7), pressing the magnet shells (5) against the motor casing (1), are prepositioned in the assembly device (2) and after the motor casing (1) is crimped over are pressed outward radially to the end operating position between the front faces of the magnet shells (5).

6. Method in accordance with one of the preceding claims with the following step of the method,
- After the motor casing (1) is crimped over, the fixed spacers (6) are first pushed into their operating end position in a mounting step of the method (II) and then the resilient clamping spring element (7) is pressed into its operating end position in a further step of the method (III).

7. Device for performing the method in accordance with at least one of the preceding claims with the following features
- The assembly device (2) fitted with the magnet shells (5) on the peripheral side, is designed in the sense of an axial guide punch for the crimpable motor casing (1).
- The assembly device (2) has, on the front end, a formed axial support for the bearing (3) and/or its securing element (4), particularly a clamping piece.
- The assembly device (2) has radial guide supports (2.2) for the distance pieces (6; 7).
- The assembly device (2) has radial pressure pieces (2.3; 2.4) for the radial movement of the distance pieces (6; 7) especially temporally offset to each other, from their radial preassembly position to their operating end position between the tangential front sides of the magnetic shells (5).

## Revendications

1. Procédé de montage dans le boîtier de moteur (1) d'un moteur électrique à excitation permanente, d'au moins un palier (3), en particulier d'un palier lisse, de coques magnétiques (5) ainsi que d'écarteurs (6 ; 7), en particulier de pièces d'écartement (6) et d'éléments de serrage élastiques (7), entre les faces frontales tangentielles des coques magnétiques (5), comportant les étapes de procédé suivantes :
- le boîtier de moteur (1), préférentiellement en forme de pot, est posé, la face frontale ouverte en avant, au-dessus d'un dispositif de montage en forme de mandrin (2),
- et est équipé des composants préalablement positionnés dans le dispositif de montage (2), d'abord du palier (3), ensuite des coques magnétiques (5) et finalement des pièces d'écartement (6,7).

2. Procédé selon la revendication précédente, comprenant les étapes suivantes :
- avant de poser le boîtier de moteur (1), le palier (3) est pré-positionné sur la face frontale du dispositif de montage (2) tournée vers le boîtier;
- avant de poser le boîtier de moteur (1), les coques magnétiques (5) sont pré-positionnées sur la périphérie du dispositif de montage (2) dans leur position définitive de fonctionnement ;
- avant de poser le boîtier de moteur (1), les écarteurs (6 ; 7) sont pré-positionnés dans le dispositif de montage (2) selon leur position tangentielle et axiale définitive de fonctionnement mais radialement décalés par rapport à cette position ;
- lors de la pose du boîtier de moteur (1), le palier (3) est définitivement fixé, au cours d'une première étape de montage (I), dans un logement de palier (1.1) frontal, en particulier en forme de pot, du boîtier de moteur (1) ;
- lorsque le boîtier de moteur (1) aura atteint, au cours de sa pose, sa position de fonctionnement finale par rapport aux coques magnétiques (5), les écarteurs (6 ; 7) sont mis en place, au cours d'une première étape de montage (II), dans leur position de fonctionnement finale.

3. Procédé selon au moins une des revendications précédentes, comprenant l'étape de procédé suivante :
- le palier (3) est posé, au cours de son pré-positionnement, sur un mandrin de montage (2.1) du dispositif de montage (2) correspondant à l'arbre du rotor (10) du moteur électrique, et supporté axialement.

4. Procédé selon au moins une des revendications précédentes, comprenant l'étape de procédé suivante :
- un élément de fixation de palier (4), en particulier une lunette de serrage élastique pouvant être introduite conjointement à la pose du boîtier de moteur (1) dans son logement de palier (1.1), est également pré-positionné entre le palier (3), en particulier un palier lisse à calottes, et son support axial sur le dispositif de montage (2).

5. Procédé selon au moins une des revendications précédentes, comprenant l'étape de procédé suivante :
- des pièces d'écartement rigides (6) et des éléments de serrage élastiques (7) qui pressent les coques magnétiques (5) contre le boîtier de moteur (1), sont pré-positionnés alternativement en direction périphérique dans le dispositif de montage (2) et sont pressés, après la pose du boîtier de moteur (1), radialement vers l'extérieur dans leurs positions finales de fonctionnement situées entre les faces frontales des coques magnétiques (5).

6. Procédé selon la revendication précédente, comprenant l'étape de procédé suivante :
- après la pose du boîtier de moteur (1), les pièces d'écartement rigides (6) sont poussées, au cours d'une étape de montage (II), dans leurs positions finales de fonctionnement, suivies par les éléments de serrage élastiques (7) au cours d'une autre étape de montage (III) .

7. Dispositif de mise en oeuvre du procédé selon au moins une des revendications précédentes, comprenant les caractéristiques suivantes :
- le dispositif de montage (2) équipé des coques magnétiques (5) sur son pourtour est réalisé sous forme de mandrin de guidage axial du boîtier de moteur (1) ;
- la face frontale du dispositif de montage (2) comporte un logement de support axial guidé pour le palier (3) ou, respectivement, pour son élément de fixation (4), en particulier une lunette de serrage ;
- le dispositif de montage (2) comprend des logements de guidage radiaux (2.2) pour les écarteurs (6 ; 7) ;
- le dispositif de montage (2) comporte des moyens de pression radiaux 2.3 ; 2.4) pour le déplacement radial, de préférence décalé dans le temps, des écarteurs (6 ; 7) depuis leur position avant le montage dans la position finale de fonctionnement entre les faces frontales tangentielles des coques magnétiques (5).
